Europäisches Patentamt

European Patent Office

Office européen des brevets

(19)

(11) Veröffentlichungsnummer: **0 262 326 B1**

(12) # EUROPÄISCHE PATENTSCHRIFT

(45) Veröffentlichungstag der Patentschrift: **15.04.92**

(51) Int. Cl.5: **C08J 3/16**

(21) Anmeldenummer: **87110849.4**

(22) Anmeldetag: **27.07.87**

(54) **Verfahren zur Herstellung eines redispergierbaren Kunststoffpulvers.**

(30) Priorität: **02.02.87 DE 3702997**
**07.08.86 DE 3626663**

(43) Veröffentlichungstag der Anmeldung:
**06.04.88 Patentblatt 88/14**

(45) Bekanntmachung des Hinweises auf die
Patenterteilung:
**15.04.92 Patentblatt 92/16**

(84) Benannte Vertragsstaaten:
**DE ES FR GB IT NL SE**

(56) Entgegenhaltungen:
**EP-A- 0 154 189**
**DE-B- 2 512 238**

(73) Patentinhaber: **Röhm GmbH**
**Kirschenallee Postfach 4242**
**W-6100 Darmstadt 1(DE)**

(72) Erfinder: **Rauch, Hubert**
**Odenwaldstrasse 6**
**W-6108 Weiterstadt 1(DE)**
Erfinder: **Klesse, Wolfgang, Dr. Dipl.-Chem.**
**Tucholskyweg 47**
**W-6500 Mainz 31(DE)**
Erfinder: **Lehmann, Klaus, Dr.**
**Schillerstrasse 85**
**W-6101 Rossdorf 1(DE)**
Erfinder: **Mager, Theodor**
**Ödenburger Strasse 54**
**W-6100 Darmstadt(DE)**

**Beschreibung**

Gebiet der Erfindung

Die Erfindung betrifft ein Verfahren zur Herstellung eines redispergierbaren Kunststoffpulvers durch Eintrocknen einer Kunststoffdispersion eines carboxylgruppenhaltigen Acrylharzes mit einer Mindestfilmbildungstemperatur MFT unter 60 Grad C, enthaltend ein dispergiertes Copolymer mit einer dynamischen Einfriertemperatur T(lambda-max) unter 150 Grad C.

Stand der Technik

In der DE-C 25 12 238 wird die Herstellung eines pulverförmigen Acrylharzes mit hohem Carboxylgruppengehalt durch Sprühtrocknen einer wäßrigen Dispersion beschrieben. Es wird dort als wesentlich bezeichnet, beim Verfahren der Sprühtrocknung die MFT nicht zu überschreiten, wenn die Latexteilchen der Dispersion nicht zu glasigen Partikeln zusammensintern, sondern in Form loser Aggregate bestehen bleiben sollen. Zwar liegt die Partikeltemperatur, solange die Dispersionströpfchen noch viel Wasser enthalten, deutlich unter der Lufttemperatur, so daß diese am Anfang auch oberhalb der MFT liegen kann, jedoch muß die Lufttemperatur bei zunehmender Entwässerung der Tröpfchen unter die MFT absinken.

In der DE-A 32 08 791 wird das Vorliegen unverglaster, lose aggregierter Latexteilchen als Voraussetzung für die Redispergierbarkeit eines pulverförmigen Polymerisats hervorgehoben. Da aus den oben genannten Gründen eine solche Struktur nur als erreichbar galt, wenn beim Sprühtrocknungsverfahren die MFT nicht überschritten wird, schied dieses Verfahren der Pulverherstellung aus carboxylgruppenhaltigen Dispersionen aus, wenn die MFT der zugrundeliegenden Dispersion niedrig lag. Infolgedessen werden gemäß dieser Druckschrift solche Dispersionen, an deren Aufbau erhebliche Anteile von Acrylsäureestern beteiligt sind und die wegen der größeren Weichheit der Polymerisate eine niedrige MFT haben, durch das teurere Verfahren der Gefriertrocknung in redispergierbare Pulver übergeführt.

In der DE-A 22 22 033 wird die Herstellung eines redispergierbaren Pulvers aus einer Kunststoffdispersion mit niedriger MFT beschrieben. Nur durch eine spezielle Polymerisatzusammensetzung aus einem Vinylester, Äthylen und Acrylamid wurde es ermöglicht, die Redispergierbarkeit zu erhalten, obwohl die Lufttemperatur am Eingang der Sprühtrocknungsanlage weit über der MFT liegt. Diese Lehre läßt sich auf andere Polymerisatzusammensetzungen nicht übertragen.

Gemäß DE-A 34 05 651 werden bimodale Dispersionen zu Pulvern sprühgetrocknet, in deren Körnern die Latexteilchen je nach den Trocknungsbedingungen lose aggregiert oder mehr oder weniger zusammengesintert oder -geschmolzen sein können. Die Eingangstemperatur der zur Sprühtrocknung eingeblasenen Luft liegt weit über der Glastemperatur des Polymerisats, z.B. im Bereich von 110 bis 250 Grad C, insbesondere 130 bis 200 Grad C. Am Ausgang des Trockners erreichen die Pulverteilchen die Temperatur des Luftstromes. Bei Endtemperaturen, die nahe bei der Glastemperatur, jedoch nicht wesentlich darüber liegen, lassen sich innerhalb der einzelnen Pulverkörnchen Zwischenzustände zwischen loser Aggregation und völliger Verglasung erreichen. Bei der praktischen Ausführung des Verfahrens sinkt die Lufttemperatur im Trockner vom Eingang bis zum Ausgang in der Regel von 130 - 200 Grad C auf 65 - 80 Grad C. Würde man unter derartigen Bedingungen eine Dispersion eines hoch carboxylgruppenhaltigen Kunststoffes mit einer dynamischen Einfriertemperatur T(lambda max) unter 150 Grad C und einer MFT unter 60 Grad C sprühtrocknen, so würde sich im Trockner ein starker Wandbelag aus zusammengesintertem Polymerisat bilden.

Aufgabe und Lösung

Es ist das Ziel der Erfindung, wäßrige Dispersionen mit hohem Carboxylgruppengehalt durch das einfache und billige Verfahren der Sprühtrocknung auch dann in redispergierbare Pulver überführen zu können, wenn sie eine MFT unter 60 Grad C haben. Solche Pulver haben z.B. auf dem Gebiet der Arzneimittelüberzüge große Bedeutung, weil sich die Redispersionen bei gemäßigten Temperaturen verarbeiten lassen. Beim Sprühtrocknen müssen starke, schwer entfernbare Wandbeläge aus zusammengesintertem Polymerisat unbedingt vermieden werden.

Es wurde gefunden, daß diese Ziele bei einem Verfahren zur Herstellung eines redispergierbaren Kunststoffpulvers durch Eintrocknen einer Kunststoffdispersion mit einer Mindestfilmbildungstemperatur MFT unter 60 Grad C, enthaltend ein dispergiertes Copolymer mit einer dynamischen Einfriertemperatur T-(lambda-max) von 60 bis 150 Grad C, das aus 20 bis 60 Gew.-% Einheiten der Acryl- oder/und Methacrylsäure, 40 bis 80 Gew.-% Einheiten niederer Alkylester der Acryl- und/oder Methacrylsäure oder

2

deren Gemisch mit Styrol sowie gegebenenfalls bis zu 10 Gew.-% Einheiten von weiteren ungesättigten, radikalisch polymerisierbaren Comonomeren aufgebaut ist, erreicht werden, wenn die Kunststoffdispersion durch Sprühtrocknung bei einer Eintrittstemperatur T-E unterhalb der dynamischen Einfriertemperatur, aber oberhalb der MFT und einer Austrittstemperatur T-A unter 65 Grad C, aber oberhalb der MFT zu verglasten Teilchen eingetrocknet wird. Vorzugsweise werden die Trockenluft und die versprühte Dispersion im Gleichstrom durch den Trockner geführt.

Unter der Eintrittstemperatur T-E wird die Temperatur des Luftstromes in der Sprühtrocknungsanlage bezeichnet, bei der die Latextröpfchen in den Luftstrom eintreten. Dementsprechend ist die Austrittstemperatur T-A die Temperatur, bei der sie von diesem getrennt werden. Die dynamische Einfriertemperatur T-(lambda-max) ist die Temperatur des Dämpfungsmaximums im Torsionsschwingungsversuch gemäß DIN 53 445. Sie hängt von der Zusammensetzung des Polymerisats ab. Als Mindestfilmbildungstemperatur MFT wird nach DIN 53 787 die niedrigste Temperatur bezeichnet, bei der eine dünne Schicht einer Kunststoffdispersion noch zu einem zusammenhängenden Film auftrocknet. Sie hängt u.a. von der Weichheit des dispergierten Polymerisats ab, wobei im Falle der erfindungsgemäß eingesetzten carboxylgruppenreichen Polymerisate zu beachten ist, daß die in der wäßrigen Phase dispergierten Latexteilchen infolge der Quellung durch Wasser weicher als der getrocknete Polymerisatfilm sind. In typischen Fällen liegt die MFT 50 Grad C oder mehr unter der dynamischen Einfriertemperatur, während diese Differenz bei carboxylgruppenarmen oder -freien Dispersionen viel geringer ist.

Im Vergleich zu den üblichen Sprühtrocknungsverfahren läuft das Verfahren der Erfindung bei niedrigerer Eintrittstemperatur ab. Der Temperaturdifferenz zwischen der Eintritts- und der Austrittstemperatur ist klenier als bei den bekannten Verfahren. Dies kommt in einem erhöhten Luftdurchsatz, bezogen auf die zu verdampfende Wassermenge, zum Ausdruck. Der Energieeinsatz wird durch die verdampfte Wassermenge bestimmt und bleibt unverändert. Ungewöhnlich ist die Durchführung des gesamten Trocknungsverfahrens bei Temperaturen oberhalb der MFT, die bisher als Obergrenze der Austrittstempertur angesehen wurde.

Ein Folge der vergleichsweise hohen Austrittstemperatur besteht darin, daß wegen der Überschreitung der MFT am Austritt die Pulverteilchen in der Regel verglast sind. Sie erscheinen unter dem Mikroskop durchscheinend und setzen ihrer Zerteilung den für den Kunststoff charakteristischen Widerstand entgegen. Überraschenderweise sind die erfindungsgemäß erzeugten Teilchen trotz der Verglasung leicht und vollständig in wäßriger Alkalilösung redispergierbar.

Die Dispersion

Die zur Sprühtrocknung eingesetzten Dispersionen können nach bekannten Verfahren hergestellt worden sein. Charakteristisch ist die im Anspruch 1 angegebene Zusammensetzung in Verbindung mit einer MFT unter 60 Grad C und einer dynamischen Einfriertemperatur unter 150 Grad C, vorzugsweise 60 bis 150 Grad C. Besonders bevorzugt ist der Bereich von 100 bis 140 Grad C. Als niedere Alkylester der Acryl- oder Methacrylsäure kommen solche mit 1 bis 8, vorzugsweise 1 bis 4 C-Atomen im Alkylrest in Betracht, vorzugsweise die Methyl-, Äthyl-und n-Butylester. Vorzugsweise ist wenigstens ein Alkylester der Acrylsäure am Aufbau des Polymerisats beteiligt. Styrol kann einen Teil der Acryl- oder Methacrylsäureester ersetzen, aber vorzugsweise nicht mehr als die Hälfte. In der Regel enthält das Copolymer keine Einheiten von weiteren Monomeren, jedoch können bis zu 10 Gew.-% solcher Einheiten beteiligt sein. Dafür kommen vor allem vernetzende Comonomere in Betracht, die zwei oder mehr radikalisch polymerisierbare Doppelbindungen, wie Acryl- oder Methacrylreste, enthalten. Weiterhin seien Einheiten des Acryl- oder Methacrylnitrils, von Acryl- oder Methacrylamid und deren N-Alkylderivaten, von Acryl- und Methacrylsäurealkylester mit mehr als 8 C-Atomen im Alkylrest oder von Hydroxyalkylestern ungesättigter polymerisierbarer Carbonsäuren als Beispiele genannt.

Je höher der Anteil der Einheiten von Acryl- oder Methacrylsäure am Aufbau des Copolymerisats liegt, um so größer ist - bei sonst gleichen Comonomeren - der Temperaturunterschied zwischen der Mindestfilmbildungstemperatur und der dynamischen Einfriertemperatur. Mit zunehmendem Anteil dieser Säureeinheiten steigen beide Temperaturen an, die dynamische Einfriertemperatur jedoch stärker als die Mindestfilmbildungstemperatur. Die Erfindung hat besondere Bedeutung für die Sprühtrocknung solcher Dispersionen, bei denen die genannten Temperaturen um mehr als 50 Grad C auseinanderliegen. Vorzugsweise werden Dispersionen verarbeitet, deren MFT unter 50 Grad, insbesondere unter 40 Grad C liegt. Selbst Dispersionen mit MFT < 35 Grad C können getrocknet werden.

Die Herstellung von Kunststoffdispersionen mit einem hohen Gehalt an Carboxylgruppen ist aus der DE-C 21 35 073 und der EP-A 73 296 bekannt.

Beim Verfahren der Erfindung werden zweckmäßig Dispersionen mit einem möglichst hohen Feststoffgehalt eingesetzt. Er kann zwischen 10 und 60, vorzugsweise zwischen 20 und 40 Gew.-% liegen. Um die Dispersion zu feinen Tröpfchen versprühen zu können, sollte ihre Viskosität nicht über 4000 mPa s liegen. Vorteilhaft ist eine Viskostität unter 1000, insbesondere unter 100 mPa s.

In der Regel enthält die Dispersion einen anionischen Emulgator, beispielsweise in einer Konzentration von 0,03 bis 3 %, bez. auf das Gewicht der Wasserphase. Daneben können nichtionische Emulgatoren enthalten sein, beispielsweise bis zu 5 Gew.-%, die gegebenenfalls auch als alleinige Emulgiermittel vorhanden sein können.

Die Sprühtrocknung

Zum Trocknen von wäßrigen Kunststoffdispersionen werden sogenannte Sprühtürme eingesetzt. Einzelheiten über ihren Aufbau und Betrieb sind K. Masters "Spray Drying Handbook" (4. Aufl. 1985, Verlag George Godwin Ltd.) zu entnehmen. Sie werden üblicherweise im Gleichstrom betrieben, und zwar vorzugsweise von oben nach unten. In diesem Falle werden die Heißluft und die Dispersion am Kopf des Sprühturms eingeführt. Die Lufttemperatur nimmt infolge der zur Verdunstung des Wassers aufgewandten Energie von oben nach unten ab. Die Dispersion wird am Kopf des Sprühturms zu feinen Tröpfchen zerstäubt; dazu dienen Sprühdüsen oder häufiger eine schnell rotierende Lochscheibe, auf die man die Dispersion fließen läßt. Die entstandenen Pulverteilchen sammeln sich am Fuß des Sprühturms im sog. Konus oder werden durch Einleiten in einen Zyklonabscheider von dem Luftstrom getrennt.

Um eine hohe Trockenleistung zu erreichen, wird der Sprühturm in der Regel mit dem größtmöglichen Luftdurchsatz betrieben. Die Luft wird vor dem Eintritt in den Sprühturm auf eine Eingangstemperatur T-E unterhalb der dynamischen Einfriertemperatur T(lambda-max) des zu trocknenden Polymerisats, aber oberhalb seiner MFT erhitzt. Der Abstand zu dieser Temperatur kann gering sein, z.B. 5 bis 20 Grad C. Oft ist aber ein größerer Abstand, z.B. 20 bis 50 Grad C vorteilhafter. Die günstigste Eingangstemperatur T-E läßt sich meistens erst experimentell am Sprühturm ermitteln, da sein Aufbau die Lage des Optimums beeinflußt. Wird T-E zu hoch eingestellt, so besteht die Gefahr, daß sich das Polymerisat als Kruste an der Wandung des Sprühturmes ansetzt. Es ist jedoch überraschend, daß diese Gefahr vermieden wird, obwohl die Lufttemperatur in der gesamten Sprühtrocknungsanlage oberhalb der MFT gehalten wird.

Die dynamische Einfriertemperatur T(lambda-max) liegt bei den im Verfahren der Erfindung verarbeiteten Emulsionspolymerisaten im Bereich von 60 bis 150 Grad C, vorzugsweise zwischen 100 und 140 Grad C. Die MFT liegt unter 60 Grad C, beispielsweise zwischen 5 und 50 Grad C. Diese Temperaturen bestimmen den engen Bereich, in dem das Verfahren der Erfindung ausgeführt werden kann. In typischen Fällen liegt T-E bei 60 bis 100 Grad C, T-A bei 30 bis 60 Grad C und die Temperaturdifferenz zwischen T-E und T-A nicht über 65 Grad C. Mit Vorteil liegt diese Differenz zwischen 30 und 50 Grad C und sollte umso kleiner sein, je niedriger T-E liegt.

Die Austrittstemperatur T-A läßt sich bei gleichbleibendem Luftdurchsatz ohne Veränderung der Eintrittstemperatur T-E durch die Zugabegeschwindigkeit der Dispersion regeln. Durch Erhöhen der je Zeiteinheit eingesprühten Dispersionsmenge wird dem Luftstrom mehr Wärme zur Verdunstung des in der Dispersion enthaltenen Wassers entzogen und dadurch T-A gesenkt. Umgekehrt kann T-A durch Verminderung der Zugabegeschwindigkeit erhöht werden. Bei gleichbleibendem Luft- und Dispersionsdurchsatz steigt und fällt T-A im gleichen Maße, wie T-E verändert wird. Unter diesen Bedingungen entsteht im Sprühturm entweder gar kein Wandbelag oder nur ein geringer Belag, der sich leicht entfernen läßt.

Das Polymerisatpulver

hat nach der Abtrennung von dem Luftstrom meistens einen Restfeuchtegehalt von 0,1 bis 7,bevorzugt 0,5 - 5 Gew.-%. Die Pulverteilchen haben eine mittlere Größe von 10 bis 500, bevorzugt 20 bis 200 microm. Sie sind hart und nicht klebrig. Im mikroskopischen Bild erscheinen sie bei 100-facher Vergrößerung scharf begrenzt und weiß bis trüb oder klar durchscheinend, was auf eine mehr oder weniger starke Verglasung bzw. Verschmelzung der Latexteilchen schließen läßt.

Verglaste Pulverteilchen wurden bisher als ungeeignet zur Redispergierung zu einem Latex angesehen. Überraschenderweise sind die erfindungsgemäß getrockneten Pulver jedoch durch Rühren in einem wäßrig-alkalischen Medium redispergierbar. Die in dem wäßrigen Medium vorhandene Alkalimenge muß unter der zur vollständigen Neutralisation der Carboxylgruppen erforderlichen Alkalimenge bleiben, weil sich das Polymerisat sonst auflösen oder die Dispersion stark verdicken würde. Vernetzte Polymerisate lösen sich nicht und vertragen daher manchmal eine höhere Alkalimenge als unvernetzte. Wenn die Carboxylgruppen schon vor der Sprühtrocknung teilweise neutralisiert worden waren, ist das Pulver auch in reinem Wasser oder in neutralen wäßrigen Medien redispergierbar. Man erhält durch die Redispergierung einen filmbildenden Latex, in welchem das Polymerisat weitgehend wieder in Form der ursprünglichen Latexteilchen

4

vorliegt. Er läßt sich in an sich bekannter Weise bei der Herstellung von Arzneimittelüberzügen anwenden. Auch für andere Anwendungsgebiete lassen sich aus den Redispersionen alkalilösliche Überzüge herstellen. Darüberhinaus sind die erfindungsgemäß hergestellten Pulver als Verdickungsmittel für alkalisch-wäßrige Medien geeignet.

BEISPIELE

Herstellung der Dispersion

A. In einem Witt'schen Topf mit Rückflußkühler, Rührwerk und Zulaufgefäß wurden bei 80 Grad C 56 g Ammoniumperoxydisulfat und 840 g des Natriumsalzes eines aus Tri-isobutylphenol und 7 Mol Äthylenoxyd hergestellten, sulfatierten Addukts in 56 kg dest. Wasser gelöst. In die Lösung wurde unter Rühren innerhalb 4 Stunden eine zuvor aus 12 kg Acrylsäureäthylester, 12 kg Methacrylsäure und 48 g Thioglykolsäure-2-äthylhexylester hergestellte Monomerenmischung bei 80 Grad C zugetropft. Nach Ende des Zulaufes wurde der Ansatz weitere 2 Std. bei 80 Grad C gehalten, auf Zimmertemperatur abgekühlt und über ein feinmaschiges Siebgewebe aus rostfreiem Stahl filtriert. Man erhielt eine niedrigviskose, feinteilige Dispersion. MFT: 29 Grad C; $T_{\lambda max}$ : 129 Grad C.

B. Man verfährt wie in Beispiel A, mit dem Unterschied, daß nach dem Abkühlen auf Raumtemperatur 6,4 kg einer 5 %-igen NaOH-Lösung in die Dispersion eingerührt wurden und die Dispersion anschließend filtriert wurde.

C. In einem 100 l fassenden Rührgefäß aus rostfreiem Stahl, ausgerüstet mit einem Rückflußkühler, Rührwerk und Zulaufgefäß, werden bei 80 Grad C 0,028 kg Ammoniumperoxodisulfat und 0,28 kg des Natriumsalzes eines mit 7 Mol Ethylenoxid oxethylierten und sulfatierten Tri-isobutylphenols in 56 kg entmineralisiertem Wasser gelöst. Zu dieser Lösung wurde unter Rühren innerhalb 4 Stunden eine aus 12 kg Ethylacrylat, 4,75 kg Methylmethacrylat, 7,2 kg Methacrylsäure und 0,05 kg Glykoldimethacrylat hergestellte Monomerenmischung bei 80 Grad C zugetropft. Danach wurde die entstandene Dispersion weitere 2 Stunden bei 80 Grad C gehalten, anschließend auf Raumtemperatur abgekühlt und filtriert. Die Dispersion war niedrigviskos und hatte eine MFT von 25 Grad C. Die dynamische Einfriertemperatur des Polymerisats $T_{\lambda max}$ betrug 84 Grad C.

D. Es wurde analog C polymerisiert, jedoch mit folgender Rezeptur:
Vorlage:
0,056 kg Ammoniumperoxodisulfat
0,23 kg Natriumsalz eines mit 7 Mol Ethylenoxid oxethylierten und sulfatierten Tri-isobutylphenols
56,00 kg entmineralisiertes Wasser
Monomerenzulauf:
13,2 kg Ethylacrylat
3,6 kg Styrol
7,2 kg Methacrylsäure
Eigenschaften des Produkts:
MFT : 24 Grad C
$T_{\lambda max}$ : 80 Grad C

Trocknen der Dispersion

Zum Trocknen der Dispersion wurde eine Sprühtrocknungsanlage verwendet, die mit einer schnell rotierenden Zerstäuberscheibe (20 000 UpM) ausgerüstet war und im Gleichstrom mit Heißluft durchströmt wurde. Der Durchsatz an Trockenluft betrug 400 m$^3$/h. Das Mengenverhältnis der Dispersion zur Luft wurde so eingestellt, daß das Sprühgut die Anlage bei der gewünschten Luftaustrittstemperatur in Form eines trockenen Pulvers verläßt. Die Eintritts- und Austrittstemperaturen der Trockenluft wurden variiert; die dabei erhaltenen Ergebnisse sind in der Tabelle zusammengestellt.

Redispergierung der Pulver

Je 600 g Wasser wurden in einem 1,5 - 2 l Gefäß vorgelegt und unter Rühren jeweils 300 g der in den Beispielen 1 bis 4 erhaltenen Pulver portionsweise eingetragen. Nach etwa 5 bis 10 min Rührzeit wurden 100 ml 0,4 %-ige Natronlauge innerhalb von 5 min unter Rühren zugetropft und noch etwa 60 min nachgerührt. In allen Fällen entstanden stabile feinteilige filmbildende Dispersionen.

300 g des im Beispiel 5 aus der Dispersion B erhaltenen Pulvers wurden unter Rühren in 700 g entmineralisiertes Wasser eingetragen und weitere 30 min gerührt. Es resultierte eine stabile, feinteilige, filmbildende Dispersion. Analog wurde in den Beispielen 6 und 7 mit den aus den Dispersionen C und D gewonnenen Dispersionen verfahren.

| Beispiel | Dispersion | T-E (°C) | T-A (°C) | (T-E) − (T-A) (K) | Restfeuchte (%) | Belag an der Wandung des Sprühturmes |
|---|---|---|---|---|---|---|
| 1 | A | 93 | 40 | 53 | 3,5 | leicht abkehrbarer, mäßiger Belag |
| 2 | A | 85 | 40 | 45 | 3,5 | schwacher, leicht abkehrbarer Belag |
| 3 | A | 74 | 35 | 39 | 3,7 | schwacher, leicht abkehrbarer Belag |
| 4 | A | 65 | 30 | 35 | 5,2 | schwacher, leicht abkehrbarer Belag |
| Vergleichsversuch | A | 137 | 67 | 70 | n.b. | starker, gesinterter Belag |
| 5 | B | 90 | 40 | 50 | 3,9 | schwacher, leicht abkehrbarer Belag |
| 6 | C | 79 | 44 | 35 | – | geringer, leicht abkehrbarer Belag |
| 7 | D | 77 | 45 | 32 | – | geringer, leicht abkehrbarer Belag |

**Patentansprüche**

1. Verfahren zur Herstellung eines redispergierbaren Kunststoffpulvers durch Eintrocknen einer Kunststoffdispersion mit einer Mindestfilmbildungstemperatur MFT unter 60 Grad C, enthaltend ein dispergiertes Copolymer mit einer dynamischen Einfriertemperatur T(lambda-max) von 60 bis 150 Grad C, das aus 20 bis 60 Gew.-% Einheiten der Acryl- oder/und Methacrylsäure, 40 bis 80 Gew.-% Einheiten niederer Alkylester der Acryl- und/oder Methacrylsäure oder deren Gemisch mit Styrol sowie gegebenenfalls bis zu 10 Gew.-% Einheiten von weiteren ungesättigten, radikalisch polymerisierbaren Comonomeren aufgebaut ist,
   dadurch gekennzeichnet,
   daß die Kunststoffdispersion durch Sprühtrocknung bei einer Eingangstemperatur T-E unterhalb der dynamischen Einfriertemperatur, aber oberhalb der MFT und einer Austrittstemperatur T-A unter 65 Grad C, aber oberhalb der MFT zu verglasten Teilchen eingetrocknet wird.

2. Verfahren nach Anspruch 1, dadurch gekennzeichnet, daß eine Kunststoffdispersion eingesetzt wird, worin die Einheiten der Carbonsäure teilweise in der Salzform vorliegen.

3. Verfahren nach einem oder beiden der Ansprüche 1 und 2, dadurch gekennzeichnet, daß die Trockenluft und die versprühte Dispersion im Gleichstrom geführt werden.

4. Verfahren nach einem oder mehreren der Ansprüche 1 bis 3, dadurch gekennzeichnet, daß das Mengenverhältnis der bei der Sprühtrocknung eingeführten Trockenluft zur eingesprühten Dispersion so eingestellt wird, daß sich eine Differenz zwischen der Eingangs- und der Ausgangstemperatur (T-E - T-A) nicht über 65 Grad C ergibt.

5. Verfahren nach einem oder mehreren der Ansprüche 1 bis 4, dadurch gekennzeichnet, daß eine Kunststoffdispersion eingesetzt wird, deren Mindestfilmbildungstemperatur (MFT) mindestens 50 Grad C unter der dynamischen Einfriertemperatur liegt.

6. Verfahren nach einem oder mehreren der Ansprüche 1 bis 5, dadurch gekennzeichnet, daß eine Kunststoffdispersion eingesetzt wird, deren Mindestfilmbildungstemperatur (MFT) unter 50 Grad C liegt.

7. Verfahren nach Anspruch 6, dadurch gekennzeichnet, daß eine Kunststoffdispersion eingesetzt wird, deren Mindestfilmbildungstemperatur (MFT) unter 40 Grad C liegt.

8. Verfahren nach Anspruch 7, dadurch gekennzeichnet, daß eine Kunststoffdispersion eingesetzt wird, deren Mindestfilmbildungstemperatur (MFT) unter 35 Grad C liegt.

**Claims**

1. Process for preparing a redispersible plastics powder by drying a plastics dispersion with a minimum film-forming temperature MFT below 60 degrees C, containing a dispersed copolymer with a dynamic freezing temperature T(lambda-max) of 60 to 150 degrees C, synthesised from 20 to 60 wt.% of units of acrylic and/or methacrylic acid, 40 to 80 wt.% of units of lower alkyl esters of acrylic and/or methacrylic acid or mixtures thereof with styrene and, optionally, up to 10 wt.% of units of further unsaturated, radically polymerisable comonomers,
   characterised in that the plastics dispersion is dried by spray-drying at an inlet temperature T-E below the dynamic freezing temperature but above the MFT and an outlet temperature T-A below 65 degrees C but above the MFT, to form glazed particles.

2. Process according to claim 1, characterised in that a plastics dispersion is used, in which the carboxylic acid units are partly present in the form of the salt.

3. Process according to one or both of claims 1 and 2, characterised in that the drying air and the sprayed dispersion are supplied in a continous flow.

4. Process according to one or more of claims 1 to 3, characterised in that the quantitative ratio between the drying air, introduced for spray drying, and the sprayed-in dispersion is adjusted so that there is a difference between the inlet and outlet temperature (T-E - T-A) of not more than 65 degrees C.

5. Process according to one or more of claims 1 to 4, characterised in that a plastics dispersion is used, the minimum film-forming temperature (MFT) of which is at least 50 degrees C below the dynamic freezing-in temperature.

6. Process according to one or more of claims 1 to 5, characterised in that a plastics dispersion is used, the minimum film-forming temperature (MFT) of which is below 50 degrees C.

7. Process according to claim 6, characterised in that a plastics dispersion is used, the minimum film-forming temperature (MFT) of which is below 40 degrees C.

8. Process according to claim 7, characterised in that a plastics dispersion is used, the minimum film-forming temperature (MFT) of which is below 35 degrees C.

**Revendications**

1. Procédé de préparation d'une poudre de matière plastique redispersable, par séchage d'une dispersion de matière plastique ayant une température minimale de formation de film TMF inférieure à 60°C, contenant un copolymère dispersé qui a une température de solidification dynamique $T_{\lambda max}$ de 60 à 150°C et qui se compose de 20 a 60% en poids de motifs d'acide acrylique et/ou méthacrylique, de 40 a 80% en poids de motifs d'esters alkyliques inférieurs de l'acide acrylique et/ou méthacrylique ou d'un mélange de ceux-ci avec du styrène, et éventuellement de 10% en poids au maximum de motifs d'autres comonomères insaturés susceptibles de polymérisation radicalaire, caractérisé en ce que la dispersion de matière plastique est séchée en particules vitrifiées par séchage par pulvérisation à une température à l'entrée T-E inférieure à la température de solidification dynamique, mais supérieure à la TMF, et à une température à la sortie T-S inférieure à 65°C, mais supérieure à la TMF.

2. Procédé selon la revendication 1, caractérisé en ce qu on utilise une dispersion de matière plastique dans laquelle les motifs de l'acide carboxylique sont présents en partie sous la forme de sel.

3. Procédé selon la revendication 1 ou 2, caractérisé en ce que l'air de séchage et la dispersion pulvérisée sont envoyés à contre-courant.

4. Procédé selon l'une quelconque des revendications 1 à 3, caractérisé en ce que le rapport de la quantité d'air de séchage introduit dans le séchage par pulvérisation à celle de la dispersion pulvérisée est réglé de sorte qu'il en résulte une différence entre les températures à l'entrée et à la sortie (T-E - T-S) qui ne dépasse pas 65°C.

5. Procédé selon l'une quelconque des revendications 1 à 4, caractérisé en ce qu'on utilise une dispersion de matière plastique dont la température minimale de formation du film (TMF) se situe au moins à 50°C au-dessous de la température de solidification dynamique.

6. Procédé selon l'une quelconque des revendications 1 à 5, caractérisé en ce qu'on utilise une dispersion de matière plastique dont la température minimale de formation du film (TMF) se situe au-dessous de 50°C.

7. Procédé selon la revendication 6, caractérisé en ce qu'on utilise une dispersion de matière plastique dont la température minimale de formation du film (TMF) se situe au-dessous de 40°C.

8. Procédé selon la revendication 7, caractérisé en ce qu'on utilise une dispersion de matière plastique dont la température minimale de formation du film (TMF) se situe au-dessous de 35°C.